(19) Europäisches Patentamt
European Patent Office
Office européen des brevets

(11) Veröffentlichungsnummer: **0 234 356**
**B1**

(12) # EUROPÄISCHE PATENTSCHRIFT

(45) Veröffentlichungstag der Patentschrift: **26.07.89**

(51) Int. Cl.⁴: **C07F 9/65**, A01N 57/16

(21) Anmeldenummer: **87101560.8**

(22) Anmeldetag: **05.02.87**

(54) **Phosphorsäureester.**

(30) Priorität: **18.02.86 DE 3605002**

(43) Veröffentlichungstag der Anmeldung: **02.09.87 Patentblatt 87/36**

(45) Bekanntmachung des Hinweises auf die Patenterteilung: **26.07.89 Patentblatt 89/30**

(84) Benannte Vertragsstaaten: **AT BE CH DE ES FR GB IT LI NL SE**

(56) Entgegenhaltungen:
**DE-A- 2 722 402**
**FR-A- 1 369 062**
**FR-A- 2 356 663**

**Die Akte enthält technische Angaben, die nach dem Eingang der Anmeldung eingereicht wurden und die nicht in dieser Patentschrift enthalten sind.**

(73) Patentinhaber: **BAYER AG, D-5090 Leverkusen 1 Bayerwerk(DE)**

(72) Erfinder: **Maurer, Fritz, Dr., Roeberstrasse 8, D-5600 Wuppertal 1(DE)**
Erfinder: **Homeyer, Bernhard, Dr., Obere Strasse 28, D-5090 Leverkusen 3(DE)**
Erfinder: **Reinecke, Paul, Dr., Steinstrasse 8, D-5090 Leverkusen 3(DE)**

**EP 0 234 356 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue 6-Oxo-pyrimidinyl-(thiono)-phosphorsäureester, Verfahren zu ihrer Herstellung und ihre Verwendung als Pflanzenschutzmittel, vorzugsweise als Insektizide und Fungizide.

Es ist bereits bekannt, daß O,O-Dialkyl-6-oxo-pyrimidinyl-phosphorsäureester wie z. B. O,O-Diethyl-O-(1,6-dihydro-1-methyl-2-i-propyl-6-oxo-pyrimidin-4-yl)-thionophosphorsäureester, O-Ethyl-O-n-propyl-O-(1,6-dihydro-1-methyl-2-i-propyl-6-oxo-pyrimidin-4-yl)-thionophosphorsäureester und O,O-Diethyl-O-(1,2-diethyl-1,6-dihydro-6-oxo-pyrimidin-4-yl)-thionophosphorsäureester, insektizide Eigenschaften aufweisen (vergl. DE-OS 26 30 054 und entsprechend US-PS 4 152 426).

Es wurden nun die neuen 6-Oxo-pyrimidinyl-(thiono)-phosphorsäureester der Formel (I) gefunden,

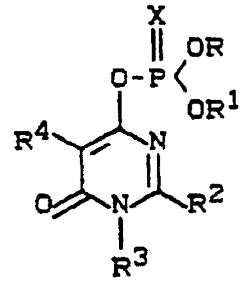

(I)

in welcher
X für Sauerstoff oder Schwefel steht,
R für Alkyl steht,
$R^1$ für Fluoralkyl steht,
$R^2$ für Wasserstoff, gegebenenfalls substituiertes Alkyl, für Alkoxy, Alkylthio, Dialkylamino oder Naphthyl oder Phenyl steht,
$R^3$ für Alkyl oder Phenyl steht und
$R^4$ für Wasserstoff, Halogen oder Alkyl steht.

Weiterhin wurde gefunden, daß man die 6-Oxo-pyrimidinyl-(thiono)-phosphorsäureester der Formel (I) erhält, wenn man

(a) Halogenide der Formel (II)

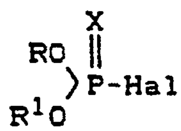

(II)

in welcher
X, R und $R^1$ die oben angegebenen Bedeutungen haben und
Hal für Halogen, vorzugsweise Chlor steht,
mit 1,6-Dihydro-4-hydroxy-6-oxo-pyrimidinen der Formel (III)

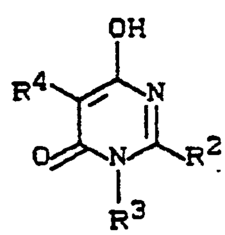

(III)

in welcher
$R^2$, $R^3$ und $R^4$ die oben angegebenen Bedeutungen haben,
gegebenenfalls in Gegenwart eines Säureakzeptors und gegebenenfalls in Gegenwart eines Lösungsmittels umsetzt;
oder wenn man

(b) für den Fall, daß $R^3$ für Alkyl steht, O-(6-Hydroxypyrimidin-4-yl)-(thiono)-phosphorsäureester der Formel (IV)

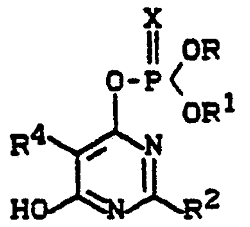

(IV)

in welcher
X, R, $R^1$, $R^2$ und $R^4$ die oben angegebenen Bedeutung haben,
(α) mit Alkylhalogeniden der Formel (V)
$R^3$-$Hal^1$ (V)
in welcher
$R^3$ für Alkyl steht und
$Hal^1$ für Halogen (vorzugsweise Chlor, Brom oder Iod) steht, oder
(β) mit Dialkylsulfaten der Formel (VI)
$R^3$-O-$SO_2$-O-$R^3$ (VI)
in welcher
$R^3$ für Alkyl steht,
gegebenenfalls in Gegenwart eines Säureakzeptors und gegebenenfalls in Gegenwart eines Lösungsmittels umsetzt.

Überraschenderweise zeichnen sich die erfindungsgemäßen 6-Oxo-pyrimidinyl-(thiono)-phosphorsäureester der Formel (I) in überragender Weise durch eine besonders hohe und lange Wirksamkeit als Pflanzenschutzmittel, insbesondere Insektizide und Akarizide, besonders bevorzugt als Insektizide und Fungizide aus. Sie weisen insbesondere auch eine sehr gute Wirksamkeit bei der Bodenbehandlung auf.

Gegebenenfalls substituiertes Alkyl $R^2$ und die Alkylreste R, $R^3$ und $R^4$ sowie die Alkylteile der Alkoxy-, Alkylthio- und Dialkylaminoreste $R^2$ können verzweigt oder unverzweigt sein und enthalten vorzugsweise jeweils 1 bis 8, insbesondere 1 bis 6 und besonders bevorzugt 1 bis 4 Kohlenstoffatome. Beispielhaft seien genannt: Methyl, Ethyl, n-Propyl, iso-Propyl, n-Butyl, iso-Butyl, sec.-Butyl, tert.-Butyl, Methoxy, Ethoxy, n-Propoxy, iso-Propoxy, n-Butoxy, sec.-Butoxy, iso-Butoxy, tert.-Butoxy, Methylthio, Ethylthio, n-Propylthio, iso-Propylthio, n-Butylthio, iso-Butylthio, sec.-Butylthio, tert.-Butylthio, Dimethylamino, Diethylamino, Di-n-propylamino, Di-iso-propylamino, Di-n-butylamino, Di-iso-butylamino, Di-sec.-butylamino oder Di-tert.-butylamino.

Alkyl R bedeutet vorzugsweise Methyl, Ethyl oder n- und i-Butyl. alkyl $R^2$ bedeutet vorzugsweise Methyl, Ethyl oder n- und i-Propyl. Alkyl $R^3$ steht vorzugsweise für Methyl oder Ethyl. Bevorzugtes Alkyl $R^4$ ist Methyl oder Ethyl.

Der Arylrest $R^2$ enthält im Arylteil vorzugsweise 6 bis 10 Kohlenstoffatome. Beispielhaft seien genannt: Naphthyl oder Phenyl, insbesondere Phenyl.

Der Fluoralkylrest $R^1$ kann verzweigt oder unverzweigt sein und enthält vorzugsweise 1 bis 8, insbesondere 1 bis 6 und besonders bevorzugt 1 bis 4 Kohlenstoffatome und 1 bis 8, vorzugsweise 1 bis 6 und besonders bevorzugt 1 bis 4 Fluoratome. Beispielhaft seien genannt: Trifluormethyl, 2,2,2-Trifluorethyl, Difluorethyl, 3,3,3-Trifluor-1-propyl, 2,2,3,3-Tetrafluor-1-propyl, 1,1,1,3,3,3-Hexafluor-2-propyl, 2-Trifluormethyl-2-propyl und 2,2,3,4,4,4-Hexafluor-1-butyl. Besonders bevorzugt werden 2,2,2-Trifluorethyl und 2,2,3,3-Tetrafluor-1-propyl.

Halogen bedeutet (wo nicht anders angegeben wird) Fluor, Chlor, Brom, Iod, vorzugsweise Fluor, Chlor und Brom, insbesondere Chlor.

Gegebenenfalls substituiertes Alkyl in der Definition von $R^2$ kann einen oder mehrere, vorzugsweise 1 bis 3, insbesondere 1 oder 2 gleiche oder verschiedene Substituenten tragen. Beispielhaft seien genannt: Halogene wie Fluor, Chlor und Brom, Nitro, Cyano sowie Alkoxy und Alkylthio mit vorzugsweise 1 bis 4, insbesondere 1 und 2 Kohlenstoffatomen. Besonders bevorzugt ist der Alkylrest $R^2$ unsubstituiert.

Bevorzugt bedeutet X in den allgemeinen Formeln Schwefel.

$R^4$ bedeutet in den allgemeinen Formeln vorzugsweise Wasserstoff.

Die Erfindung betrifft vorzugsweise Verbindungen der Formel (I), in welcher
X für Sauerstoff oder Schwefel (vorzugsweise Schwefel) steht,
R für Alkyl mit 1 bis 6 Kohlenstoffatomen steht,
$R^1$ für Fluoralkyl mit 1 bis 6 Kohlenstoffatomen und 1 bis 6 Fluoratomen steht,
$R^2$ für Wasserstoff, für gegebenenfalls durch Fluor, Chlor, Brom, Nitro, Cyano, $C_1$-$C_4$-Alkoxy oder $C_1$-$C_4$-Alkylthio substituiertes Alkyl mit 1 bis 6 Kohlenstoffatomen, für Alkoxy, Alkylthio oder Dialkylamino mit jeweils 1 bis 6 Kohlenstoffatomen je Alkylteil oder für Phenyl steht,
$R^3$ für Alkyl mit 1 bis 6 Kohlenstoffatomen oder Phenyl steht und
$R^4$ für Wasserstoff, Fluor, Chlor, Brom oder Alkyl mit 1 bis 6 Kohlenstoffatomen steht.

Besonders bevorzugt sind die Verbindungen der Formel (I), in welcher
X für Sauerstoff oder Schwefel (vorzugsweise Schwefel) steht,
R für Alkyl mit 1 bis 4 Kohlenstoffatomen (vorzugsweise Methyl, Ethyl, n-Propyl und i-Propyl) steht,
$R^1$ für Fluoralkyl mit 1 bis 4 Kohlenstoffatomen und 1 bis 6 Fluoratomen (vorzugsweise Trifluormethyl, 2,2,2-Trifluorethyl, 2,2,3,3-Tetrafluorpropyl und 1,1,1,3,3,3-Hexafluor-2-propyl, insbesondere 2,2,2-Trifluorethyl oder 2,2,3,3-Tetrafluorpropyl) steht,
$R^2$ für Wasserstoff, für gegebenenfalls durch Fluor, Chlor, Methoxy, Ethoxy, Methylthio oder Ethylthio substituiertes Alkyl mit 1 bis 4 Kohlenstoffatomen für Alkoxy mit 1 bis 4 Kohlenstoffatomen, für Alkylthio mit 1 bis 4 Kohlenstoffatomen, für Dialkylamino mit 1 bis 4 Kohlenstoffatomen je Alkylrest oder für Phenyl (vorzugsweise für Methyl, Ethyl, n-und i-Propyl, Methylthio oder Methylthiomethyl) steht,
$R^3$ für Alkyl mit 1 bis 4 Kohlenstoffatomen oder Phenyl (vorzugsweise für Methyl oder Ethyl) steht und
$R^4$ für Wasserstoff, Fluor, Chlor, Brom oder Alkyl mit 1 bis 4 Kohlenstoffatomen (vorzugsweise für Wasserstoff, Methyl oder Ethyl, insbesondere für Wasserstoff) steht.

Ganz besonders bevorzugt sind die Verbindungen der Formel (I) in welche
X für Schwefel steht,
R für Ethyl steht,
$R^1$ für $CH_2CF_3$ oder $CH_2CF_2CHF_2$ steht,
$R^2$ für Ethyl, i-Propyl oder Methylthio steht,
$R^3$ für Methyl oder Ethyl steht und
$R^4$ für Wasserstoff steht.

Verwendet man beispielsweise für die erfindungsgemäße Verfahrensvariante (a) 0-Ethyl-0-(2,2,2-trifluorethyl)-thionophosphorsäurediesterchlorid und 1,6-Dihydro-4-hydroxy-1-methyl-6-oxo-pyrimidin als Ausgangsstoffe, so kann die entsprechende Reaktion durch das folgende Formelschema wiedergegeben werden:

a)

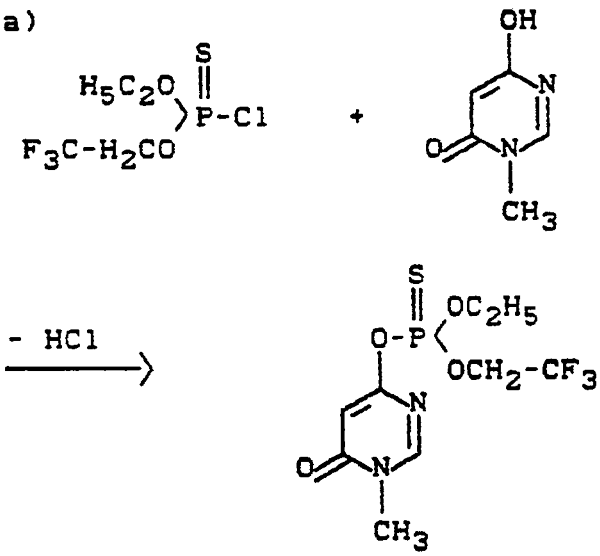


Verwendet man beispielsweise für das erfindungsgemäße Verfahren (b) 0-Ethyl-0-(2,2,2-trifluorethyl)-0-(5-ethyl-6-hydroxy-2-i-propyl-pyrimidin-4-yl)-thionophosphorsäureester und Methyliodid als Ausgangsstoffe, so kann die entsprechende Reaktion durch das folgende Formelschema wiedergegeben werden:

(b)

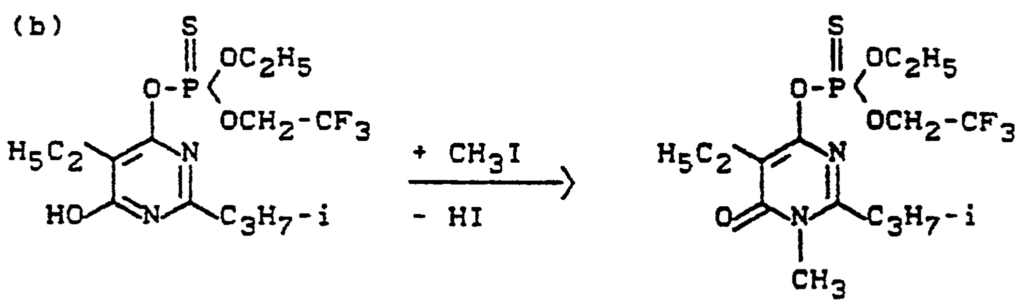

Die als Ausgangsstoffe einzusetzenden Halogenide sind durch die Formel (II) definiert. In dieser Formel stehen X, R und $R^1$ für diegenigen Reste, welche bei der Definition in Formel (I) angegeben sind. Hal steht in dieser Formel für Halogen, insbesondere Chlor oder Brom, besonders bevorzugt für Chlor.

Die Verbindungen der Formel (II) sind neu und Gegenstand eines älteren Schutzrechtes (vergl. die deutsche Patentanmeldung P 35 27 861). Sie lassen sich auf einfache Weise nach bekannten Methoden herstellen, indem man Dihalogenide der Formel (VII),

$$\overset{\overset{\displaystyle X}{\|}}{RO\text{-}P}(Hal)_2 \qquad (VII)$$

in welcher
R, X und Hal die oben angegebenen Bedeutungen haben,
mit Alkoholen der Formel (VIII)
$R^1OH$ (VIII)
in welcher
$R^1$ die oben angegebene Bedeutung hat,
in Gegenwart von Säureakzeptoren wie z. B. Kollidin, N,N-Dimethylanilin, Dimethylbenzylamin, Pyridin oder Triethylamin und in Gegenwart von inerten Verdünnungsmitteln wie z. B. Toluol bei Temperaturen zwischen -10 °C und +50 °C in etwa molaren Mengen umsetzt (vgl. auch Durchführungsbeispiele II-1 bis II-8).

Die Ausgangsverbindungen der Formel (VII) sind allgemein bekannte Verbindungen der organischen Chemie.

Als Beispiele für die Verbindungen der Formel (VII) seien genannt:
0-Methyl-, 0-Ethyl-, 0-n-Propyl-, 0-i-Propyl-, 0-n-Butyl-, 0-i-Butyl-, 0-sec.-Butyl- und 0-tert.-Butyl-(thiono)-phosphorsäureester-dichlorid bzw. -dibromid.

Die Ausgangsverbindungen der Formel (VIII) sind allgemein bekannte Verbindungen der organischen Chemie.

Als Beispiele für die Verbindungen der Formel (VIII) seien genannt:
Trifluormethanol, Difluormethanol, 2,2,2-Trifluorethanol, 3,3,3-Trifluorpropanol, 2,2,3,3-Tetrafluorpropanol, 1,1,1,3,3,3-Hexafluorpropan-2-ol, 3,3,3-Trifluor-propan-2-ol und 2,2,3,4,4,4-Hexafluorbutan-1-ol.

Als Beispiele für die Halogenide der Formel (II) seien genannt:
0-Methyl-0-trifluormethyl-, 0-Ethyl-0-trifluormethyl-, 0-n-Propyl-0-trifluormethyl-, 0-i-Propyl-0-trifluormethyl-, 0-n-Butyl-0-trifluormethyl-, 0-i-Butyl-0-trifluormethyl-, 0-sec.-Butyl-0-trifluormethyl-, 0-tert.-Butyl-0-trifluormethyl-, 0-Methyl-0-difluormethyl-,0-Ethyl-0-difluormethyl-, 0-n-Propyl-0-difluormethyl-, 0-i-Propyl-0-difluormethyl-, 0-n-Butyl-0-difluormethyl-, 0-i-Butyl-0-difluormethyl-, 0-sec.-Butyl-0-difluormethyl-, 0-tert.-Butyl-0-difluormethyl-, 0-Methyl-0-(2,2,2-trifluorethyl)-, 0-Ethyl-0-(2,2,2-trifluorethyl)-, 0-n-Propyl-0-(2,2,2-trifluorethyl)-, 0-i-Propyl-0-(2,2,2-trifluorethyl)-, 0-n-Butyl-0-(2,2,2-trifluorethyl)-, 0-i-Butyl-0-(2,2,2-trifluorethyl)-, 0-sec.-Butyl-0-(2,2,2-trifluorethyl)-, 0-tert.-Butyl-0-(2,2,2-trifluorethyl)-, 0-Methyl-0-(3,3,3-trifluorpropyl)-, 0-Ethyl-0-(3,3,3-trifluorpropyl)-, 0-n-Propyl-0-(3,3,3-trifluorpropyl)-, 0-i-Propyl-0-(3,3,3-trifluorpropyl)-, 0-n-Butyl-0-(3,3,3-trifluorpropyl)-, 0-i-Butyl-0-(3,3,3-trifluorpropyl)-, 0-sec.-Butyl-0-(3,3,3-trifluorpropyl)-, 0-Methyl-0-(2,2,3,3-tetrafluorpropyl)-, 0-Ethyl-0-(2,2,3,3-tetrafluorpropyl)-, 0-n-Propyl-0-(2,2,3,3-tetrafluorpropyl)-, 0-i-Propyl-0-(2,2,3,3-tetrafluorpropyl)-, 0-n-Butyl-0-(2,2,3,3-tetrafluorpropyl)-, 0-i-Butyl-0-(2,2,3,3-tetrafluorpropyl)-, 0-sec.-Butyl-0-(2,2,3,3-tetrafluorpropyl)-, 0-Methyl-0-(1,1,1,3,3,3-hexa fluor-2-propyl)-, 0-Ethyl-0-(1,1,1,3,3,3-hexafluor-2-propyl)-, 0-n-Propyl-0-(1,1,1,3,3,3-hexafluor-2-propyl)-, 0-n-Butyl-0-(1,1,1,3,3,3-hexafluor-2-propyl)-, 0-Methyl-0-(3,3,3-trifluor-2-propyl)-, 0-Ethyl-0-(3,3,3-trifluor-2-propyl)-, 0-n-Propyl-0-(3,3,3-trifluor-2-propyl)-, 0-i-Propyl-0-(3,3,3-trifluor-2-propyl)-, 0-n-Butyl-0-(3,3,3,-trifluor-2-propyl)-, 0-Methyl-0-(2,2,3,4,4,4- hexafluor-1-butyl)-, 0-Ethyl-0-(2,2,3,4,4,4-hexafluor-1-butyl)-, 0-n-Propyl-0-(2,2,3,4,4,4-hexafluor-1-butyl)-, 0-i-Propyl-0-(2,2,3,4,4,4-hexafluor-1-butyl)-, 0-n-Butyl-0-(2,2,3,4,4, 4-hexafluor-1-butyl)-, 0-i-Butyl-0-(2,2,3,4,4,4-hexafluor-1-butyl)-, 0-sec.-Butyl-0-(2,2,3,4,4,4-hexafluor-1-butyl)-und 0-tert.-Butyl-0-(2,2,3,4,4,4-hexafluor-1-butyl)-(thiono)-phosphorsäureesterchlorid bzw. -bromid.

Die weiterhin als Ausgangsstoffe für die Verfahrensvariante (a) zu verwendenden 1,6-Dihydro-4-hydroxy-6-oxo-pyrimidine der Formel (III) sind bekannt und/oder können nach allgemein bekannten Verfahren und Methoden hergestellt werden (vergl. z. B. DE-OS 26 30 054 bzw. US-PS 4 152 426).

Als Beispiele für die Verbindungen der Formel (III) seien genannt:

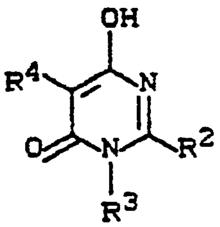

(III)

Tabelle 1

| $R^2$ | $R^3$ | $R^4$ | $R^2$ | $R^3$ | $R^4$ |
|---|---|---|---|---|---|
| $-C_2H_5$ | $-C_2H_5$ | H | $-C_3H_7$-i | $-CH_3$ | H |
| $-C_3H_7$-i | $-CH_3$ | $-C_2H_5$ | $-SCH_3$ | $-CH_3$ | H |
| $-CH_2SCH_3$ | $-CH_3$ | H | $-C_3H_7$-i | 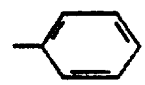 | H |
| 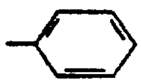 | $-CH_3$ | H | $-OCH_3$ | $-CH_3$ | H |
| $-N(CH_3)_2$ | $-CH_3$ | H | H | $-C_3H_7$-i | H |
| $-C_3H_7$-i | $-CH_3$ | Cl | $-C_3H_7$-i | $-CH_3$ | Br |
| $-CH_3$ | $-CH_3$ | $-CH_3$ | $-CH_3$ | $-C_2H_5$ | $-CH_3$ |
| $-CH_3$ | $-C_3H_7$-i | $-C_2H_5$ | $-C_4H_9$-t. | $-CH_3$ | H |
| $-C_3H_7$-n | $-CH_3$ | H | | | |

Die für die Verfahrensvariante (b) als Ausgangsstoffe zu verwendenden 0-(6-Hydroxy-pyrimidin-4-yl)-(thiono)-phosphorsäureester der Formel (IV) sind neu und können nach allgemein üblichen Verfahren hergestellt werden, indem man 4,6-Dihydroxypyrimidine der Formel (IX)

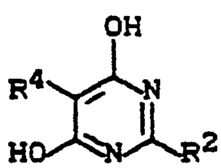

(IX)

in welcher
$R^2$ und $R^4$ die oben angegebenen Bedeutungen haben,
mit etwa molaren Mengen von Halogeniden der Formel (II), gegebenenfalls in Gegenwart von Säureakzeptoren wie z. B. Triethylamin und gegebenenfalls in Gegenwart von Verdünnungsmitteln, wie z. B. Methylenchloride, bei Temperaturen zwischen 0 °C und 60 °C umsetzt.

Für die Definitionen in den Formeln (IV) und (IX) gelten die gleichen bevorzugten Definitionen der Reste, wie sie für die Formel (I) angegeben werden.

Die Verbindungen der Formel (IX) sind bekannte Verbindungen der organischen Chemie.

Als Beispiele für die Verbindungen der Formel (IV) seien genannt:

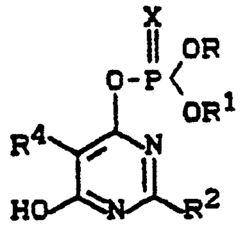 (IV)

Tabelle 2

| X | R | $R^1$ | $R^2$ | $R^4$ |
|---|---|---|---|---|
| S | $-C_2H_5$ | $-CH_2CF_3$ | $-CH_3$ | H |
| S | $-C_2H_5$ | $-CH_2CF_3$ | $-C_2H_5$ | H |
| S | $-C_2H_5$ | $-CH_2CF_3$ | $-C_3H_7$-i | H |
| S | $-C_2H_5$ | $-CH_2CF_2CHF_2$ | $-C_3H_7$-i | H |
| S | $-C_2H_5$ | $-CH_2CF_2CHF_2$ | $-C_2H_5$ | H |
| S | $-C_3H_7$-i | $-CH_2CF_2CHF_2$ | $-C_2H_5$ | H |
| S | $-C_2H_5$ | $-CH_2CF_3$ | $-SCH_3$ | H |
| S | $-C_2H_5$ | $-CH_2CF_3$ | $-CH_2SCH_3$ | H |
| S | $-C_2H_5$ | $-CH_2CF_3$ | $-C_3H_7$-i | $-C_2H_5$ |
| S | $-C_2H_5$ | $-CH_2CF_3$ | 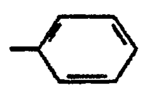 | H |
| S | $-C_2H_5$ | $-CH_2CF_3$ | $-OCH_3$ | H |
| S | $-C_2H_5$ | $-CH_2CF_2CHF_2$ | $-N(CH_3)_2$ | H |
| S | $-C_2H_5$ | $-CH_2CF_3$ | H | H |
| S | $-C_2H_5$ | $-CH_2CF_3$ | $-C_3H_7$-i | Cl |
| S | $-C_2H_5$ | $-CH_2CF_3$ | $-C_3H_7$-i | Br |
| S | $-C_2H_5$ | $-CH_2CF_2CHF_2$ | $-C_3H_7$-i | Cl |

Tabelle 2 - Fortsetzung

| X | R | $R^1$ | $R^2$ | $R^4$ |
|---|---|---|---|---|
| S | $-C_2H_5$ | $-CH_2CF_2CHF_2$ | $-C_3H_7$-i | Br |
| S | $-CH_3$ | $-CH_2CF_3$ | $-C_3H_7$-i | H |
| S | $-C_3H_7$-n | $-CH_2CF_3$ | $-C_2H_5$ | H |
| S | $-C_2H_5$ | $-CH(CF_3)_2$ | $-C_3H_7$-i | H |
| S | $-C_2H_5$ | $-CH(CF_3)_2$ | $-C_2H_5$ | H |
| O | $-C_2H_5$ | $-CH_2CF_3$ | $-C_3H_7$-i | H |
| S | $-CH_3$ | $-CH_2CF_3$ | $-C_4H_9$-t. | H |
| S | $-CH_3$ | $-CH_2CF_2CHF_2$ | $-C_3H_7$-i | H |
| S | $-C_3H_7$-i | $-CH_2CF_3$ | $-C_3H_7$-i | H |
| S | $-C_3H_7$-i | $-CH_2CF_2CHF_2$ | $-C_3H_7$-i | H |
| S | $-C_3H_7$-i | $-CH_2CF_3$ | $-C_4H_9$-t | H |

Die weiterhin für die Verfahrensvariante (b/α) oder (b/β) zu verwendenden Alkylhalogenide oder Dialkylsulfate sind durch die Formel (V) bzw. (VI) allgemein definiert. In dieser Formel steht $R^3$ vorzugsweise für Alkyl mit 1 bis 6 Kohlenstoffatomen, insbesondere für Methyl, Ethyl, n-Propyl, i-Propyl, n-Butyl, i-Butyl, sec.-Butyl und tert.-Butyl. In den Alkylsulfaten der Formel (VI) steht $R^3$ vorzugsweise für Methyl oder Ethyl.

Als Beispiele für die Verbindungen der Formel (V) seien genannt:
Methyl-, Ethyl-, n-Propyl-, i-Propyl-, n-Butyl-, i-Butyl-, sec.-Butyl- und tert.-Butyl-chlorid, -bromid oder jodid.

Als Beispiele für die Verbindungen der Formel (VI) seien genannt:
Dimethyl-, Diethyl- und Di-n-propylsulfat.

Die Verbindungen der Formel (V) und (VI) sind bekannte Verbindungen der organischen Chemie.

Die erfindungsgemäßen Verfahrensvarianten (a) und (b) zur Herstellung der neuen Verbindungen der Formel (I) werden bevorzugt unter Verwendung von Verdünnungsmitteln durchgeführt. Als Verdünnungsmittel kommen praktisch alle inerten Lösungsmittel in Frage.

Hierzu gehören vorzugsweise aliphatische und aromatische, gegebenenfalls halogenierte Kohlenwasserstoffe wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Di chlorbenzol, Ether wie Diethyl- und Dibutylether, Glykoldimethylether und Diglykoldimethylether, Tetrahydrofuran und Dioxan, Ketone wie Aceton, Methyl-ethyl-, Methyl-isopropyl- und Methyl-isobutyl-keton, Ester wie Essigsäuremethylester und-ethylester, Nitrile wie z. B. Acetonitril und Propionitril, Amide wie z. B. Dimethylformamid, Dimethylacetamid und N-Methyl-pyrrolidon sowie Dimethylsulfoxid, Tetramethylensulfon und Hexamethylphosphorsäuretriamid.

Die erfindungsgemäßen Verfahrensvarianten (a) und (b) können gegebenenfalls in Gegenwart von Säureakzeptoren durchgeführt weden. Als Säureakzeptoren können alle üblichen Säurebindemittel Verwendung finden. Besonders bewährt haben sich Alkalicarbonate wie Natrium- und Kaliumcarbonat, Erdalkalioxide und -hydroxide wie Magnesiumoxid und Calciumhydroxid, Alkalihydride wie Natriumhydrid, ferner aliphatische, aromatische oder heterocyclische Amine, beispielsweise Triethylamin, Trimethylamin, Dimethylanilin, Dimethylbenzylamin und Pyridin.

Die erfindungsgemäßen Verfahrensvarianten (a) und (b) werden im allgemeinen bei Temperaturen zwischen 0 °C und 100 °C durchgeführt. Bevorzugt wird der Bereich zwischen 10 °C und 80 °C. Die Umsetzungen werden im allgemeinen bei Normaldruck durchgeführt.

Zur Durchführung der Verfahrensvariante (a) setzt man die Ausgangsstoffe vorzugsweise im

äquimolaren Verhältnis ein. Ein Überschuß der einen oder anderen Komponente bringt keine wesentlichen Vorteile. Die Reaktionspartner werden im allgemeinen in einem der angegebenen Lösungsmittel vereinigt und meist bei erhöhter Temperatur zur Vervollständigung der Umsetzung eine oder mehrere Stunden gerührt. Danach fügt man ein organisches Lösungsmittel, z. B. Toluol zum Reaktionsgemisch und arbeitet die organische Phase nach üblichen Methoden durch Waschen, Trocknen und Abdestillieren des Lösungsmittels auf.

Bei der Verfahrensvariante (b) wird das Alkylhalogenid der Formel (V) bzw. das Dialkylsulfat der Formel (VI) in äquimolaren Mengen oder in 10 bis 15 %igem Überschuß eingesetzt. Die Reaktionsdurchführung und Aufarbeitung erfolgt wie bei Variante (a) beschieben.

Die neuen Verbindungen fallen oft in Form von Ölen an, die sich meist nicht unzersetzt destillieren lassen, jedoch durch sogenanntes "Andestillieren", d. h. durch längeres Erhitzen unter vermindertem Druck auf mäßig erhöhte Temperaturen von den letzten flüchtigen Anteilen befreit um auf diese Weise gereinigt werden können. Zu ihrer Charakterisierung dient der Brechungsindex.

Die Wirkstoffe eignen sich bei guter Pflanzenverträglichkeit und günstiger Warmblütertoxizität zur Bekämpfung von tierischen Schädlingen, insbesondere Insekten und Spinnentieren, die in der Landwirtschaft, in Forsten, im Vorratsund Materialschutz sowie auf dem Hygienesektor, vorzugsweise an Pflanzen oder am bzw. im Boden, vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z/B. Forficula auricularia.

Aus der Ordnung der Isoptera z.B. Reticulitermes spp..

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus pinarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguelle, Homona magnanima, Tortrix viridana.

Aus der Ordnung der Coleoptera z.B. Anobium punctatum, Rhizopertha dominica, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis captitata, Dacus oleae, Tipula paludosa.

Aus der Ordnung der Siphonaptera z.B. Xenopsylla cheopis, Ceratophyllus spp.,

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae,

Eriophyes ribis, Phyllocoptruta oleivora, Boophilus spp., Rhipicephalus spp., Amblyomma spp., Hyalomma spp., Ioxdes spp., Psoroptes spp., Chorioptes spp., Sarcoptes spp., Tarsonemus spp., Bryobia praetiosa, Panonychus spp., Tetranychus spp.,

Die erfindungsgemäßen Wirkstoffe weisen außerdem eine starke mikrobizide, insbesondere fungizide, Wirkung auf und können insbesondere zur Bekämpfung von unerwünschten Mikroorganismen, vorzugsweise Pilze, welche an oder in Pflanzen sowie am oder im Boden vorkommen, im Pflanzenschutz verwendet werden.

Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes und Deuteromycetes.

Beispielhaft aber nicht begrenzend seien einige Erreger von pilzlichen Erkrankungen, die unter die oben aufgezählten Oberbegriffe fallen, genannt:

Pythium-Arten, wie beispielsweise Pythium ultimum; Phytophthora-Arten, wie beispielsweise Phytophthora infestans;

Pseudoperonospora-Arten, wie beispielsweise Pseudoperonospora humuli oder Pseudoperonospora cubense;

Plasmopara-Arten, wie beispielsweise Plasmopara viticola;

Peronspora-Arten, wie beispielsweise Peronospora pisi oder P. brassicae;

Erysiphe-Arten, wie beispielsweise Erysiphe graminis;

Sphaerotheca-Arten, wie beispielsweise Sphaerotheca fuliginea;

Podosphaera-Arten, wie beispielsweise Podosphaera leucotricha;

Venturia-Arten, wie beispielsweise Venturia inaequalis;

Pyrenophora-Arten, wie beispielsweise Pyrenophora teres oder P. graminea;

(Konidienform: Drechslera, Syn: Helminthosporium);

Cochliobolus-Arten, wie beispielsweise Cochliobolus sativus;

(Kondienform: Drechslera, Syn: Helminthosporium);

Uromyces-Arten, wie beispielsweise Uromyces appendiculatus;

Piccinia-Arten, wie beispielsweise Puccinia recondita;

Tilletia-Arten, wie beispielsweise Tilletia caries;

Ustilago-Arten, wie beispielsweise Ustilago nuda oder Ustilago avenae;

Pellicularia-Arten, wie beispielsweise Pellicularia sasakii;

Pyricularia-Arten, wie beispielsweise Pyricularia oryzae;

Fusarium-Arten, wie beispielsweise Fusarium culmorum;

Botrytis-Arten, wie beispielsweise Botrytis cinerea;

Septoria-Arten, wie beispielsweise Septoria nodorum;

Leptosphaeria-Arten, wie beispielsweise Leptosphaeria nodorum;

Cercospora-Arten, wie beispielsweise Cercospora canescens;

Alternaria-Arten, wie beispielsweise Alternaria brassicae;

Pseudocercosporella-Arten, wie beispielseise Pseudocercosporella herpotrichoides.

Die gute Pflanzenverträglichkeit der Wirkstoffe in den zur Bekämpfung von Pflanzenkrankheiten notwendigen Konzentrationen erlaubt eine Behandlung von oberirdischen Pflanzenteilen, von Pflanz- und Saatgut, und des Bodens.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesent lichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethlketon, Methylisobutylketon oder Cyclohexanon, stark polare Lösungsmittel, wie Diemthylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Plyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrycyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Die erfindungsgemäßen Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die erfindungsgemäßen Wirkstoffe der Formel (I) zeichnen sich durch hervorragende insektizide und fungizide Wirksamkeit aus. Sie zeigen insbesondere beim Einsatz als Bodeninsektizide eine hervorragende Wirkung gegen Maden wie z. B. Phorbia antiqua-Maden und als Fungizide bei der Bekämpfung von Getreidekrankheiten wie z. B. Getreidemehltau (Erysiphe graminis) und echtem Mehltau.

Die erfindungsgemäßen Verbindungen können auch als Blattinsektizide, Akarizide und gegen Hygiene- und Vorratsschädlinge eingesetzt werden.

Die Wirksamkeit der erfindungsgemäßen Verbindungen soll durch die folgenden Beispiele erläutert werden:

In den folgenden Verwendungsbeispielen wurden die folgenden Verbindungen als Vergleichssubstanzen eingesetzt:

(A)

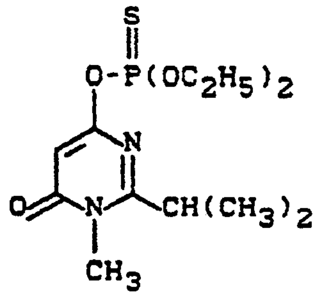

(B)

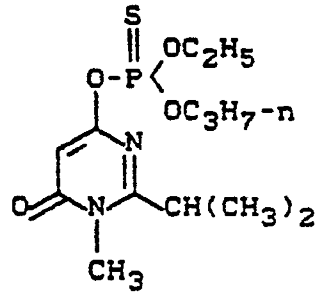

(C)

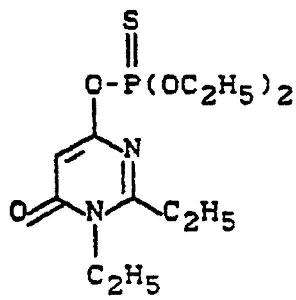

(bekannt aus DE-OS 26 30 054 entsprechend US-PS 4 152 426).

Beispiel A

Grenzkonzentrations-Test / Bodeninsekten

Testinsekt: Phorbia antiqua-Maden (im Boden)
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentral mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigten z. B. die Verbindungen der Herstellungsbeispiele 1, 2, 3 und 4 bei einer beispielhaften Wirkstoffkonzentration von 10 ppm eine 100 %ige Wirkung.

Beispiel B

Erysiphe-Test (Gerste) / protekiv

Lösungsmittel: 100 Gewichtsteile Dimethylformamid
Emulgator: 0.25 Gewichtsteile Alkylarylpolyglykolether

Zur Herstellung einer zweckmäßigen Wirkstoffzubereitung vermischt man 1 Gewichsteil Wirkstoff mit den angegebenen Mengen Lösungsmittel und Emulgator und verdünnt das Konzentral mit Wasser auf die gewünschte Konzentration.

Zur Prüfung auf protektive Wirksamkeit besprüht man junge Pflanzen mit der Wirkstoffzubereitung taufeucht. Nach Antrocknen des Spritzbelages werden die Pflanzen mit Sporen von Erysiphe graminis f.sp.hordei bestäubt.

Die Pflanzen werden in einem Gewächshaus bei einer Temperatur von ca. 20°C und einer relativen Luftfeuchtigkeit von ca. 80 % aufgestellt, um die Entwicklung von Mehltaupusteln zu begünstigen.

7 Tage nach der Inokulation erfolgt die Auswertung.

Bei diesem Test mit einer beispielhaften Wirkstoff-Konzentration von 0,00025 % zeigten z. B. die Verbindung aus Beispiel 2 einen Krankheitsbefall von 18,7 % und die Verbindung aus Beispiel 7 einen Krakheitsbefall von 45,0 %, während die Vergleichsverbindung (C) bei der gleichen Konzentration einen Krankeitsbefall von 100 % (jeweils bezogen auf die unbehandelte Kontrolle) ergab.

Die Herstellung der erfindungsgemäßen Verbindungen soll durch die folgenden Beispiele erläutert werden:

Herstellungsbeispiele

Beispiel 1

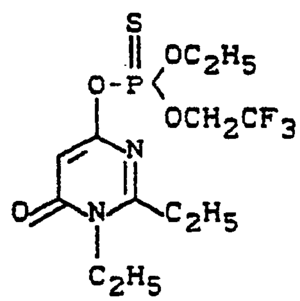

(Verfahrensvariante (a))

Eine Mischung aus 8,4 g (0,05 Mol) 1,6-Dihydro-1,2-diethyl-4-hydroxy-6-oxo-pyrimidin (Darstellung vgl. DE-A-26 30 054), 10,4 g (0,075 Mol) Kaliumcarbonat, 12,1 g (0.05 Mol) 0-Ethyl-0-(2,2,2-trifluorethyl)-thionophosphorsäurediesterchlorid und 200 ml Acetonitril wird 18 Stunden bei 25 °C gerührt. Nach Zugabe von 250 ml Toluol wird zweimal mit je 150 ml Wasser extrahiert, die organische Phase über Natriumsulfat getrocknet und das Lösungsmittel im Vakuum abdestilliert. Der Rückstand wird im Hochvakuum bei 60 °C andestilliert.

Man erhält auf diese Weise 9,3 g (49 % der Theorie) 0-Ethyl-0-(2,2,2-trifluorethyl)-0-(1,2-diethyl-1,6-dihydro-6-oxo-pyrimidin-4-yl)-thionophosphorsäureester in Form eines beigen Öles mit dem Brechungsindex

$$n_D^{22} : 1,4888.$$

Beispiel 2

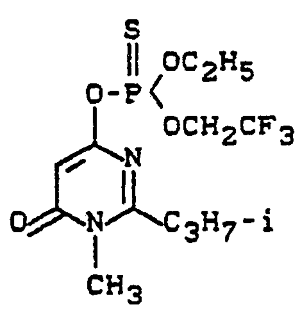

(Verfahrensvariante (b))

31 g (0,08 Mol) 0-Ethyl-0-(2,2,2-trifluorethyl)-0-(6-hydroxy-2-i-propyl-pyrimidin-4-yl)-thionophoshorsäureester werden in 60 ml Toluol vorgelegt und bei 20 bis 25 °C mit 3,5 g (0,047 Mol) Calciumhydroxid versetzt. Dazu tropft man bei 0 °C bis 10 °C 12 g (0,094 Mol) Dimethylsulfat zu und rührt 16 Stunden bei 20 °C bis 25 °C nach. Das Reaktionsgemisch wird abgesaugt. Das Filtrat wird einmal mit 50 ml 5 %iger

Ntronlauge, einmal mit 50 ml 5 %iger Salzsäure und zweimal mit je 50 ml Wasser gewaschen und anschließend im Vakuum bei 60 °C vom Lösungsmittel befreit.

Man erhält so 26,7 g (83 % der Theorie) 0-Ethyl-0-(2,2,2-trifluorethyl)-0-(1,6-dihydro-1-methyl-2-i-propyl-6-oxo-pyrimidin-4-yl)-thionophosphorsäureester in Form eines gelben Öles mit dem Brechungsindex

$$n_D^{22} : 1,4891$$

Analog Beispiel 1 oder 2 bzw. einem der Verfahren (a) oder (b) können z. B. die folgenden Verbindungen der Formal (I)

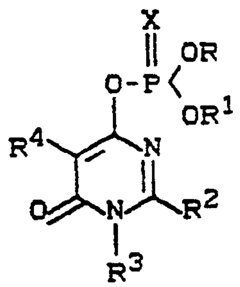

(I)

hergestellt werden:

Tabelle 3

| Beisp.-Nr. | R | $R^1$ | $R^2$ | $R^3$ | $R^4$ | X | Brechungsindex; Schmp. [° C] |
|---|---|---|---|---|---|---|---|
| 3 | $-C_2H_5$ | $-CH_2CF_2CHF_2$ | $-C_3H_7$-i | $-CH_3$ | H | S | $n_D^{21}$ : 1,4866 |
| 4 | $-C_2H_5$ | $-CH_2CF_2CHF_2$ | $-C_2H_5$ | $-C_2H_5$ | H | S | $n_D^{22}$ : 1,4744 |
| 5 | $-C_3H_7$-i | $-CH_2CF_2CHF_2$ | $-C_2H_5$ | $-C_2H_5$ | H | S | $n_D^{22}$ : 1,4841 |
| 6 | $-C_2H_5$ | $-CH_2CF_3$ | $-C_3H_7$-i | 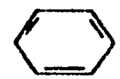 | H | S | 82 - 84 |
| 7 | $-C_2H_5$ | $-CH_2CF_3$ | $-SCH_3$ | $-CH_3$ | H | S | 50 - 52 |
| 8 | $-C_2H_5$ | $-CH_2CF_3$ | $-CH_2-S-CH_3$ | $-CH_3$ | H | S | $n_D^{23}$ : 1,5272 |
| 9 | $-C_2H_5$ | $-CH_2CF_3$ | $-C_3H_7$-i | $-CH_3$ | $-C_2H_5$ | S | $n_D^{23}$ : 1,4837 |
| 10 | $-C_2H_5$ | $-CH_2CF_3$ | 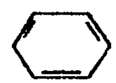 | $-CH_3$ | H | S | |
| 11 | $-C_2H_5$ | $-CH_2CF_3$ | $-OCH_3$ | $-CH_3$ | H | S | |
| 12 | $-C_2H_5$ | $-CH_2CF_3$ | $-C_4H_9$-t. | $-CH_3$ | H | S | |
| 13 | $-C_2H_5$ | $-CH_2CF_3$ | $-C_3H_7$-i | $-CH_3$ | H | O | |

Tabelle 3 - Fortsetzung

| Beisp.-Nr. | R | $R^1$ | $R^2$ | $R^3$ | $R^4$ | X | Brechungsindex; Schmp. [° C] |
|---|---|---|---|---|---|---|---|
| 14 | $-C_2H_5$ | $-CH_2CF_2CHF_2$ | $-N(CH_3)_2$ | $-CH_3$ | H | S | |
| 15 | $-C_2H_5$ | $-CH_2CF_3$ | H | $-C_3H_7$-i | H | S | |
| 16 | $-C_2H_5$ | $-CH_2CF_3$ | $-C_3H_7$-i | $-CH_3$ | Cl | S | |
| 17 | $-C_2H_5$ | $-CH_2CF_2CHF_2$ | $-C_3H_7$-i | $-CH_3$ | Br | S | |
| 18 | $-CH_3$ | $-CH_2CF_3$ | $-C_3H_7$-i | $-CH_3$ | H | S | |
| 19 | $-C_3H_7$-n | $-CH_2CF_3$ | $-C_2H_5$ | $-C_2H_5$ | H | S | |
| 20 | $-C_2H_5$ | $-CH(CF_3)_2$ | $-C_3H_7$-i | $-CH_3$ | H | S | |

Ausgangstoffe der Formel (IV)

Beispiel (IV-1)

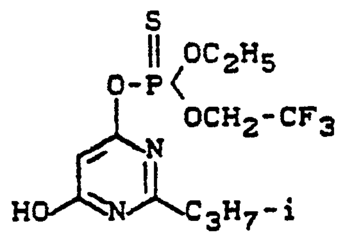

Eine Mischung aus 12,9 g (0,084 Mol) 2-Isopropyl-4,6-dihydroxy-pyrimidin, 8,8 g (0,0875 Mol) Triethylamin und 70 ml Methylenchlorid wird eine Stunde bei 20 °C gerührt und dann bei 5 bis 10 °C mit 17 g (0,07 Mol) 0-Ethyl-0-(2,2,2-trifluorethyl)-thionophosphorsäurediesterchlorid versetzt. Das Reaktionsgemisch wird 18 Stunden bei Raumtemperatur gerührt und dann im Vakuum eingedampft. Der Rückstand wird mit 200 ml Toluol versezt und zweimal mit je 100 ml Wasser extrahiert. Die organische Phase wird über Natriumsulfat getrocknet und im Vakuum eingedampft.

Man erhält 15,2 g (60% der Theorie) 0-Ethyl-0-(2,2,2,-trifluorethyl)-0-(6-hydroxy-2-i-propyl-pyrimidin-4-yl)-thionophophorsäureester in Form farblose Kristalle mit dem Schmelzpunkt 55 °C.

Analog erhält man z. B.:

Beispiel (IV-2)

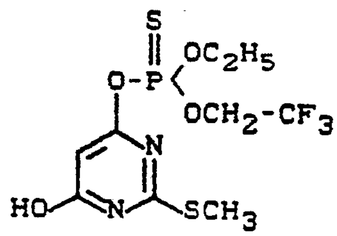

Fp: 92 °C

Beispiel (IV-3)

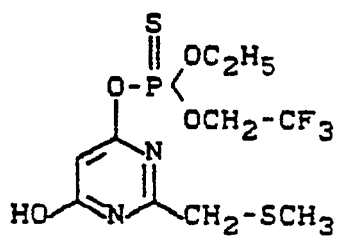

$n_D^{22}$ : 1,5386

Beispiel (IV-4)

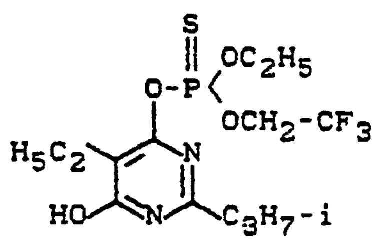

$n_D^{21}$ : 1,4917

Ausgangsprodukte der Formel (II)

Beispiel (II-1)

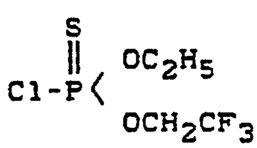

Zu einer Lösung von 89,5 g (0,5 Mol) 0-Ethyl-thiophosphorsäureesterdichlorid in 300 ml Toluol tropft

man bei 15-20°C unter leichtem Kühlen eine Mischung aus 60,5 g (0,5 Mol) Kollidin und 50 g (0,5 Mol) 2,2,2-Trifluorethanol. Das Reaktionsgemisch wird 24 Stunden bei 20°C nachgerührt, mit 100 ml Wasser, dann mit 100 ml 2 proz. Salzsäure und dreimal mit je 100 ml Wasser gewaschen, über Natriumsulfat getrocknet und im Vakuum eingedampft.

Man erhät so 75,8 g (62 % der Theorie) 0-Ethyl-0-(2,2,2-trifluorethyl)-thionophosphorsäurediesterchlorid in Form eines farblosen Öles mit dem Siedepunkt 62-64°C/11 mbar.

Analog Beispiel (II-1) können die folgenden Verbindungen der Formel (II)

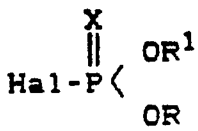

(II) Hal = Cl

hergestellt werden:

| Bsp. Nr. | R | $R^1$ | X | physikal. Konstante |
|---|---|---|---|---|
| II-2 | $C_2H_5$ | $CHF_2-CF_2-CH_2-$ | S | Kp:46-49° C /0,01 mbar |
| II-3 | $i-C_3H_7$ | $CF_3-CH_2-$ | S | Kp:68° C /14 mbar |
| II-4 | $CH_3$ | $CF_3-CH_2-$ | S | |
| II-5 | $C_2H_5$ | $CF_3-CH_2-$ | O | |
| II-6 | $C_2H_5$ | $(CF_3)_2CH-$ | S | |
| II-7 | $n-C_3H_7$ | $CF_3-CH_2-$ | S | |
| II-8 | $i-C_3H_7$ | $CHF_2-CF_2-CH_2-$ | S | $n_D^{21}$ :1,4486 |

## Patentansprüche

1. 6-Oxo-pyrimidinyl-(thiono)-phosphorsäureester der Formel (I)

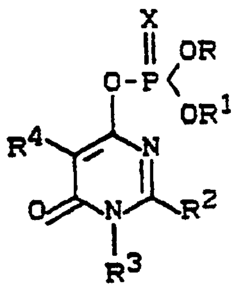

(I)

in welcher
X für Sauerstoff oder Schwefel steht,
R für Alkyl steht,
$R^1$ für Fluoralkyl steht,
$R^2$ für Wasserstoff, gegebenenfalls substituiertes Alkyl, für Alkoxy, Alkylthio, Dialkylamino oder Naphthyl oder Phenyl steht,
$R^3$ für Alkyl oder Phenyl steht und
$R^4$ für Wasserstoff, Halogen oder Alkyl steht.

2. Verbindungen der Formel (I), gemäß Anspruch 1, in welcher
X für Sauerstoff oder Schwefel steht,
R für Alkyl mit 1 bis 6 Kohlenstoffatomen steht,
$R^1$ für Fluoralkyl mit 1 bis 6 Kohlenstoffatomen und 1 bis 6 Fluoratomen steht,
$R^2$ für Wasserstoff, für gegebenenfalls durch Fluor, Chlor, Brom, Nitro, Cyano, $C_1$-$C_4$-Alkoxy oder $C_1$-$C_4$-Alkylthio substituiertes Alkyl mit 1 bis 6 Kohlenstoffatomen, für Alkoxy, Alkylthio oder Dialkylamino mit jeweils 1 bis 6 Kohlenstoffatomen je Alkylteil oder für Phenyl steht,
$R^3$ für Alkyl mit 1 bis 6 Kohlenstoffatomen oder Phenyl steht und
$R^4$ für Wasserstoff, Fluor, Chlor, Brom oder Alkyl mit 1 bis 6 Kohlenstoffatomen steht.

3. Verbindungen der Formel (I) gemäß Anspruch 1, in welcher
X für Sauerstoff oder Schwefel steht,
R für Alkyl mit 1 bis 4 Kohlenstoffatomen steht,
$R^1$ für Fluoralkyl mit 1 bis 4 Kohlenstoffatomen und 1 bis 6 Fluoratomen steht,
$R^2$ für Wasserstoff, für gegebenenfalls durch Fluor, Chlor, Methoxy, Ethoxy, Methylthio oder Ethylthio substituiertes Alkyl mit 1 bis 4 Kohlenstoffatomen, für Alkoxy mit 1 bis 4 Kohlenstoffatomen, für Alkylthio mit 1 bis 4 Kohlenstoffatomen, für Dialkylamino mit 1 bis 4 Kohlenstoffatomen je Alkylrest oder für Phenyl steht,
$R^3$ für Alkyl mit 1 bis 4 Kohlenstoffatomen oder Phenyl steht und
$R^4$ für Wasserstoff, Fluor, Chlor, Brom oder Alkyl mit 1 bis 4 Kohlenstoffatomen steht.

4. Verfahren zur Herstellung der 6-Oxo-pyrimidinyl-(thiono)-phosphorsäureester der Formel (I)

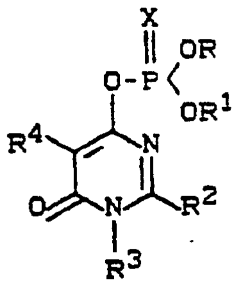

(I)

in welcher
X für Sauerstoff oder Schwefel steht,
R für Alkyl steht,
$R^1$ für Fluoralkyl steht,
$R^2$ für Wasserstoff, gegebenenfalls substituiertes Alkyl,für Alkoxy, Alkylthio, Dialkylamino oder Aryl steht
$R^3$ für Alkyl oder Aryl steht und
$R^4$ für Wasserstoff, Halogen oder Alkyl steht,
dadurch gekennzeichnet, daß man

(a) Halogenide der Formel (II)

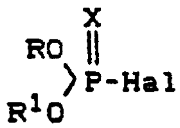

(II)

in welcher
X, R und $R^1$ die oben angegebenen Bedeutungen haben und
Hal für Halogen steht,
mit 1,6-Dihydro-4-hydroxy-6-oxo-pyrimidinen der Formel (III)

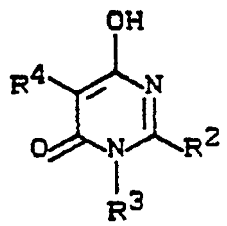

(III)

in welcher
$R^2$, $R^3$ und $R^4$ die oben angegebenen Bedeutungen haben,
gegebenenfalls in Gegenwart eines Säureakzeptors und gegebenenfalls in Gegenwart eines Lösungsmittels umsetzt;
oder
(b) für den Fall, daß $R^3$ für Alkyl steht, 0-(6-Hydroxypyrimidin-4-yl)-(thiono)-phosphorsäureester der Formel (IV)

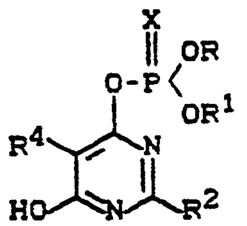

(IV)

in welcher
X, R, $R^1$, $R^2$ und $R^4$ die oben angegebenen Bedeutungen haben,
(α) mit Alkylhalogeniden der Formel (V)
$R^3$-$Hal^1$ (V)
in welcher
$R^3$ für Alkyl steht und
$Hal^1$ für Halogen oder
(β) mit Dialkylsulfaten der Formel (VI)
$R^3$-O-$SO_2$-O-$R^3$ (VI)
in welcher
$R^3$ für Alkyl steht,
gegebenenfalls in Gegenwart eines Säureakzeptors und gegebenenfalls in Gegenwart eines Lösungsmittels umsetzt.

5. Schädlingsbekämpfungsmittel, gekennzeichnet durch einen Gehalt an mindestens einer Verbindung der Formel (I) gemäß Anspruch 1 oder 4.

6. Verwendung von Verbindungen der Formel (I) gemäß Anspruch 1 oder 4 zur Bekämpfung von Schädlingen, insbesondere von Insekten und Pilzen.

7. Verfahren zur Bekämpfung von Schädlingen, dadurch gekennzeichnet, daß man Verbindungen der Formel (I) gemäß Anspruch 1 oder 4 auf die Schädlinge, vorzugsweise Insekten und Pilze oder ihren Lebensraum einwirken läßt.

8. Verfahren zur Herstellung von Schädlingsbekämpfungsmitteln, dadurch gekennzeichnet, daß man Verbindungen der Formel (I) gemäß Anspruch 1 oder 4 mit Streckmitteln und/oder oberflächenaktiven Mitteln vermischt.

9. 0-(6-Hydoxypyrimidin-4-yl)-(thiono)-phosphorsäureester der Formel (IV)

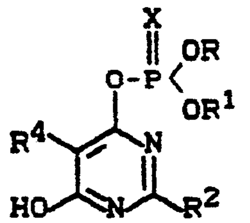

(IV)

in welcher
X für Sauerstoff oder Schwefel steht,
R für Alkyl steht,
$R^1$ für Fluoralkyl steht,
$R^2$ für Wasserstoff, gegebenenfalls substituiertes Alkyl, für Alkoxy, Alkylthio, Dialkylamino oder Aryl steht, und
$R^4$ für Wasserstoff, Halogen oder Alkyl steht.

10. Verfahren zur Herstellung der 0-(6-Hydroxy-pyrimidin-4-yl)-(thiono)-phosphorsäureester der Formel (IV)

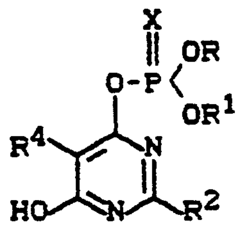

(IV)

in welcher
X, R, $R^1$, $R^2$ und $R^4$ die in Anspruch 9 angegebene Bedeutungen haben,
dadurch gekennzeichnet, daß man 4,6-Dihydroxypyrimidine der Formel (IX)

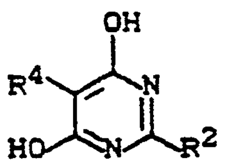

(IX)

in welcher
$R^2$ und $R^4$ die in Anspruch 9 angegebenen Bedeutungen haben,
mit Halogeniden der Formel (II)

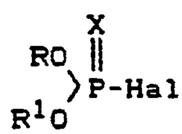

(II)

in welcher
X, R und $R^1$ die in Anspruch 9 angegebene Bedeutung haben und
Hal für Halogen steht,
gegebenenfalls in Gegenwart von Säureakzeptoren wie z. B. Triethylamin und gegebenenfalls in Gegenwart von Verdünnungsmitteln, umsetzt.

## Claims

1. 6-Oxo-pyrimidinyl (thiono)-phosphates of the formula (I)

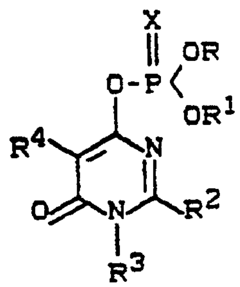

(I)

in which
X represents oxygen or sulphur,
R represents alkyl,
$R^1$ represents fluoralkyl,
$R^2$ represents hydrogen, optionally substituted alkyl, or alkoxy, alkylthio, dialkylamino, naphthyl or phenyl,
$R^3$ represents alkyl or phenyl and
$R^4$ represents hydrogen, halogen or alkyl.

2. Compounds, according to claim 1, of the formula (I) in which
X represents oxygen or sulphur,
R represents alkyl having 1 to 6 carbon atoms,
$R^1$ represents fluoroalkyl having 1 to 6 carbon atoms, and 1 to 6 fluorine atoms,
$R^2$ represents hydrogen, alkyl which has 1 to 6 carbon atoms and which is optionally substituted by fluorine, chlorine, bromine, nitro, cyano, $C_1$–$C_4$-alkoxy or $C_1$–$C_4$-alkylthio, or alkoxy, alkylthio or dialkylamino having 1 to 6 carbon atoms per alkyl part, or phenyl,
$R^3$ represents alkyl having 1 to 6 carbon atoms, or phenyl and
$R^4$ represents hydrogen, fluorine, chlorine, bromine, or alkyl, having 1 to 6 carbon atoms.

3. Compounds, according to claim 1, of the formula (I) in which
X represents oxygen or sulphur,
R represents alkyl having 1 to 4 carbon atoms,
$R^1$ represents fluoroalkyl having 1 to 4 carbon atoms and 1 to 6 fluorine atoms,
$R^2$ represents hydrogen, alkyl which has 1 to 4 carbon atoms and which is optionally substituted by fluorine, chlorine, methoxy, ethoxy, methylthio or ethylthio, or alkoxy having 1 to 4 carbon atoms, alkylthio having 1 to 4 carbon atoms, dialkylamino having 1 to 4 carbon atoms per alkyl radical, or phenyl,
$R^3$ represents alkyl having 1 to 4 carbon atoms, or phenyl and
$R^4$ represents hydrogen, fluorine, chlorine, bromine or alkyl having 1 to 4 carbon atoms.

4. Process for the preparation of the 6-oxo-pyrimidinyl (thiono)-phosphoric acid esters of the formula (I)

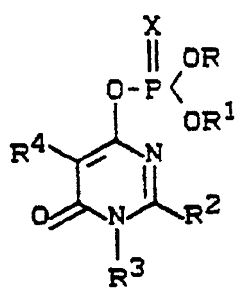

(I)

in which
X represents oxygen or sulphur,
R represents alkyl,
$R^1$ represents fluoralkyl,
$R^2$ represents hydrogen, optionally substituted alkyl, or represents alkoxy, alkylthio, dialkylamino or aryl,
$R^3$ represents alkyl or aryl and
$R^4$ represents hydrogen, halogen or alkyl, characterized in that
(a) halides of the formula (II)

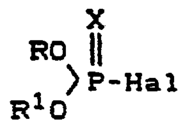

(II)

in which
X, R and $R^1$ have the abovementioned meanings and Hal represents halogen are reacted with 1,6-dihydro-4-hydroxy-6-oxo-pyrimidines of the formula (III)

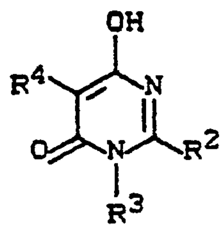

(III)

in which
$R^2$, $R^3$ and $R^4$ have the abovementioned meanings, if appropriate in the presence of an acid acceptor and if appropriate in the presence of a solvent; or
(b) in the case where $R^3$ represents alkyl, 0-(6-hydroxy-pyrimidin-4-yl) (thiono)-phosphates of the formula (IV)

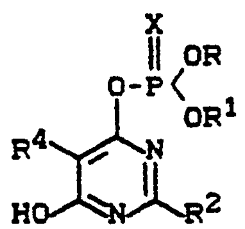

(IV)

in which
X, R, $R^1$, $R^2$ and $R^4$ have the abovementioned meanings,
($\alpha$) are reacted with alkyl halides of the formula (V)
$R^3$-$Hal^1$ (V)
in which
$R^3$ represents alkyl and
$Hal^1$ represents halogen, or
($\beta$) are reacted with dialkyl sulphates of the formula (VI)
$R^3$-O-$SO_2$-O-$R^3$ (VI)
in which
$R^3$ represents alkyl, if appropriate in the presence of an acid acceptor and if appropriate in the presence of a solvent.

5. Pesticides, characterized in that they contain at least one compound of the formula (I), according to claim 1 or 4.

6. Use of compounds of the formula (I), according to claim 1 or 4, for combating pests, particularly insects and fungi.

7. Process for combating pests, characterized in that compounds of the formula (I), according to claim 1 or 4, are allowed to act on the pests, preferably insects and fungi, or on their habitat.

8. Process for the preparation of pesticides, characterized in that compounds of the formula (I), according to claim 1 or 4, are mixed with extenders and/or surfactants.

9. 0-(6-Hydroxypyrimidin-4-yl) (thiono)-phosphoric acid esters of the formula (IV)

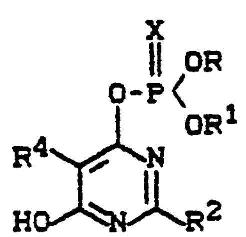

(IV)

in which

X represents oxygen or sulphur,
R represents alkyl,
$R^1$ represents fluoroalkyl,
$R^2$ represents hydrogen, optionally substituted alkyl, or alkoxy, alkylthio, dialkylamino or aryl, and
$R^4$ represents hydrogen, halogen or alkyl.

10. Process for the preparation of the 0-(6-hydroxy-pyrimidin-4-yl) (thiono)-phosphoric acid esters of the formula (IV)

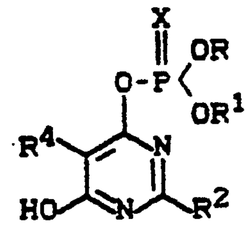

(IV)

in which
X, R, $R^1$, $R^2$ and $R^4$ have the meanings stated in claim 9, characterized in that 4,6-dihydroxypyrimidines of the formula (IX)

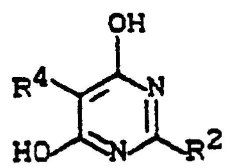

(IX)

in which
$R^2$ and $R^4$ have the meanings stated in claim 9, are reacted with halides of the formula (II)

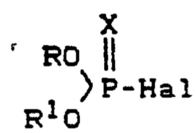

(II)

in which
X, R and $R^1$ have the meaning stated in claim 9 and Hal represents halogen, if appropriate in the presence of acid acceptors, such as, for example, triethylamine, and if appropriate in the presence of diluents.

**Revendications**

1. Esters de l'acide 6-oxo-pyrimidinyl-(thiono)-phosporique de formule (I):

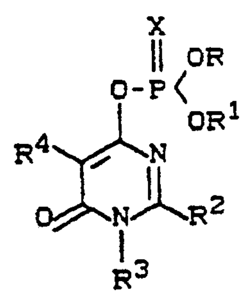

(I)

dans laquelle
X représente un atome d'oxygène ou de soufre,
R représente un radical alkyle,
$R^1$ représente un radical fluoralkyle
$R^2$ représente un atome d'hydrogène, un radical alkyle éventuellement substitué, un radical alcoxy, un radical alkylthio, un radical dialkylamino ou un radical naphtyle ou phényle,
$R^3$ représente un radical alkyle ou un radical phényle, et
$R^4$ représente un atome d'hydrogène, un atome d'halogène ou un groupe alkyle.

2. Composés de formule (I) selon la revendication 1, formule dans laquelle
X représente un atome d'oxygène ou de soufre,
R représente un radical alkyle contenant 1 à 6 atomes de carbone,
$R^1$ représente un radical fluoralkyle contenant 1 à 6 atomes de carbone et 1 à 6 atomes de fluor,
$R^2$ représente un atome d'hydrogène, un radical alkyle contenant 1 à 6 atomes de carbone et éventuellement substitué par un atome de fluor, un atom de chlore, un atom de brome, un groupe nitro, un groupe cyano, un groupe alcoxy en $C_1$–$C_4$ ou par un groupe alkyl(en $C_1$–$C_4$)thio, un groupe alcoxy, un groupe alkylthio ou un groupe dialkylamino contenant chacun 1 à 6 atomes de carbone par fraction alkyle, ou un radical phényle,
$R^3$ représente un radical alkyle contenant 1 à 6 atomes de carbone ou un radical phényle, et
$R^4$ représente un atome d'hydrogène, un atome de fluor, un atome de chlore, un atome de brome ou un radical alkyle contenant 1 à 6 atomes de carbone.

3. Composés de formule (I) selon la revendication 1, formule dans laquelle
X représente un atome d'oxygène ou de soufre,
R représente un radical alkyle contenant 1 à 4 atomes de carbone,
$R^1$ représente un radical fluoralkyle contenant 1 à 4 atomes de carbone et 1 à 6 atomes de fluor,
$R^2$ représente un atome d'hydrogène, un radical alkyle contenant 1 à 4 atomes de carbone et éventuellement substitué par un atome de fluor, un atome de chlore, un groupe méthoxy, un groupe éthoxy, un groupe méthylthio ou par un groupe éthylthio, un groupe alcoxy contenant 1 à 4 atomes de carbone, un groupe alkylthio contenant 1 à 4 atomes de carbone, un groupe dialkylamino contenant 1 à 4 atomes de carbone par radical alkyle ou un radical phényle,
$R^3$ représente un groupe alkyle contenant 1 à 4 atomes de carbone ou un radical phényle, et
$R^4$ représente un atome d'hydrogène, un atome de fluor, un atome de chlore, un atome de brome ou un radical alkyle contenant 1 à 4 atomes de carbone.

4. Procédé de préparation des esters d'acide 6-oxo-pyrimidinyl-(thiono)-phosporique de formule (I):

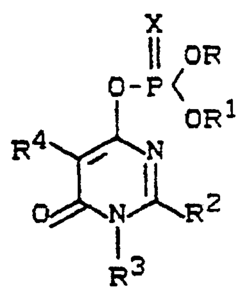

(I)

dans laquelle
X représente un atome d'oxygène ou de soufre,
R représente un radical alkyle,
$R^1$ représente un radical fluoralkyle,
$R^2$ représente un atome d'hydrogène, un radical alkyle éventuellement substitué, un radical alcoxy, un radical alkylthio, un radical dialkylamino ou un radical aryle,
$R^3$ représente un radical alkyle ou un radical aryle, et
$R^4$ représente un atome d'hydrogène, un atome d'halogène ou un radical alkyle, caractérisé en ce que:
(a) on fait réagir des halogénures de formule (II):

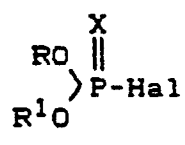

(II)

dans laquelle
X, R et $R^1$ ont les significations indiquées ci-dessus, et
Hal représente un atome d'halogène, avec des 1,6-dihydro-4-hydroxy-6-oxo-pyrimidines de formule (III):

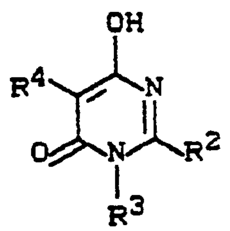

(III)

dans laquelle
$R^2$, $R^3$ et $R^4$ ont les significations indiquées ci-dessus, éventuellement en présence d'un accepteur d'acide et éventuellement en présence d'un solvant; ou
(b) lorsque $R^3$ représente un radical alkyle, on fait réagir des esters de l'acide 0-(6-hydroxy-pyrimidin-4-yl)-(thiono)-phosphorique de formule (IV):

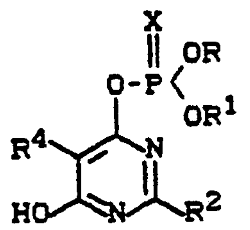

(IV)

dans laquelle
X, R, $R^1$, $R^2$ et $R^4$ ont les significations indiquées ci-dessus,
(α) avec des halogénures d'alkyle de formule (V):
$R^3$-$Hal^1$ (V)
dans laquelle
$R^3$ représente un radical alkyle, et
$Hal^1$ représente un atome d'halogène, ou
(β) avec des sulfates de dialkyle de formule (VI):
$R^3$-O-$SO_2$-O-$R^3$ (VI)
dans laquelle
$R^3$ représente un radical alkyle, éventuellement en présence d'un accepteur d'acide et éventuellement en présence d'un solvant.

5. Agent parasiticide, caractérisé en ce qu'il contient au moins un composé de formule (I) selon la revendication 1 ou 4.

6. Utilisation de composés de formule (I) selon la revendication 1 ou 4 en vue de combattre les parasites, en particulier, les insectes et les champignons.

7. Procédé en vue de combattre les parasites, caractérisé en ce qu'on fait agir des composés de formule (I) selon la revendication 1 ou 4, sur les parasites, de préférence, sur les insectes et les champignons ou leur biotope.

8. Procédé de préparation d'agents parasiticides, caractérisé en ce qu'on mélange des composés de formule (I) selon la revendication 1 ou 4 avec des diluants et/ou des agents tensioactifs.

9. Esters de l'acide 0-(6-hydroxy-pyrimidin-4-yl-(thiono)-phosphorique de formule (IV):

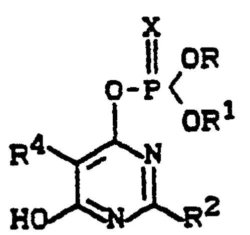

(IV)

dans laquelle
X représente un atome d'oxygène ou de soufre,
R représente un radical alkyle,
$R^1$ représente un radical fluoralkyle,
$R^2$ représente un atome d'hydrogène, un radical alkyle éventuellement substitué, un radical alcoxy, un radical alkylthio, un radical dialkylamino ou un radical aryle, et
$R^4$ représente un atome d'hydrogène, un atome d'halogène ou un radical alkyle.

10. Procédé de préparation des esters de l'acide 0-(6-hydroxy-pyrimidin-4-yl)-(thiono)-phosphorique de formule (IV):

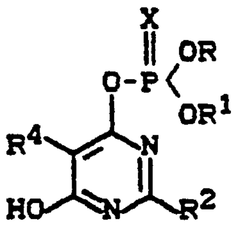

(IV)

dans laquelle
X, R, $R^1$, $R^2$ et $R^4$ ont les significations indiquées dans la revendication 9, caractérisé en ce qu'on fait réagir des 4,6-dihydroxy-pyrimidines de formule (IX):

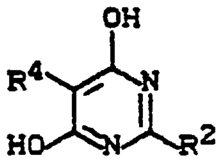

(IX)

dans laquelle
$R^2$ et $R^4$ ont les significations indiquées dans la revendication 9, avec des halogénures de formule (II)

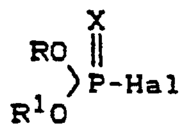

(II)

dans laquelle
X, R et $R^1$ ont les significations indiquées dans la revendication 9, et
Hal représente un atome d'halogène, éventuellement en présence d'accepteurs d'acides tels que, par exemple, la tiréthylamine, et éventuellement en présence de diluants.